(19) **Europäisches Patentamt**
**European Patent Office**
**Office européen des brevets**

(11) **EP 4 418 153 A1**

(12) **EUROPEAN PATENT APPLICATION**
published in accordance with Art. 153(4) EPC

(43) Date of publication:
**21.08.2024 Bulletin 2024/34**

(21) Application number: **21960665.4**

(22) Date of filing: **15.10.2021**

(51) International Patent Classification (IPC):
**G06F 21/33** (2013.01)

(52) Cooperative Patent Classification (CPC):
**G06F 21/33; G06F 21/31; H04L 63/08;**
**H04L 63/0823;** G06F 21/32; G06F 2221/2103;
H04L 63/067; H04L 63/083; H04L 63/0838;
H04L 63/0861; H04W 12/06

(86) International application number:
**PCT/JP2021/038196**

(87) International publication number:
**WO 2023/062809 (20.04.2023 Gazette 2023/16)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Fujitsu Limited**
**Kawasaki-shi, Kanagawa 211-8588 (JP)**

(72) Inventors:
• **NAKAYAMA, Takayoshi**
**Kawasaki-shi, Kanagawa 211-8588 (JP)**
• **KAWASAKI, Takeshi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **AUTHENTICATION PROGRAM, AUTHENTICATION DEVICE, AND AUTHENTICATION METHOD**

(57)    The computer accepts the user's request for service use and certification information indicating that the user has been authenticated, issued by one or more authentication sources, respectively. In a case where the number of accepted pieces of certification information is no less than a predetermined number, the computer permits the user to use the service.

FIG. 6

## Description

FIELD

The present disclosure relates to authentication techniques.

BACKGROUND

The distributed identity (ID) distribution system is a system that distributes an identity certificate including digitized user identity (ID) information with the consent of the user himself/herself. The user ID information is identification information for identifying the user.

In relation to the distributed ID distribution systems, an identity verification program is known that can reduce the burden required for user identity verification in multiple operators (see, for example, Patent Document 1 and Patent Document 2).

There is also known the ID-bridge service system that prevents an identity provider from providing identity information with a confidence level exceeding the service provider's requirement, which the user does not want to disclose (see, e.g., Patent Document 3). The independent identity management system for authenticating users and/or user equipment is also known (see, e.g., Patent Document 4). Authentication techniques using multi-factor authentication are also known (see, e.g., Patent Document 5 and Patent Document 6).

SUMMARY

TECHNICAL PROBLEM

In the distributed ID distribution system, it is important to ensure that an identity certificate is issued by a publisher to a legitimate user. Therefore, the issuer performs user authentication based on the authentication information presented by the user, and issues an ID certificate to the user when the identity of the user is confirmed. As the authentication information, for example, a user ID and a password are used.

In this case, since the user is required to present authentication information by each issuer, the user's workload increases as the number of ID certificates to be obtained increases. In addition, since the issuer performs user authentication based on the authentication information for each user, the processing load of user authentication increases when the number of users requesting ID certificates increases.

Such problem may occur not only in services that issue ID certificates, but also in cases where various services are provided to users.

In one aspect, the present disclosure aims to simplify user authentication when a user uses a service.

SOLUTION TO PROBLEM

In one proposal, the authentication program causes the computer to perform the following processing.

The computer accepts a service use request of a user and certification information indicating that the user has been authenticated, issued by one or more authentication sources, respectively. In a case where the number of accepted pieces of certification information is no less than a predetermined number, the computer permits the user to use the service.

ADVANTAGEOUS EFFECTS OF INVENTION

According to one aspect, it is possible to simplify user authentication when a user uses a service.

BRIEF DESCRIPTION OF DRAWINGS

FIG. 1 is a functional block diagram of an authentication device;
FIG. 2 is a flowchart of the authentication processing ;
FIG. 3 is a functional block diagram of the first service system;
FIG. 4 is a functional block diagram of a requesting device;
FIG. 5 is a functional block diagram of a service unit;
FIG. 6 illustrates a first service usage processing;
FIG. 7 is a flowchart of the first identifier possession certificate issuing processing;
FIG. 8 is a flow chart of an ID certificate request process;
FIG. 9 is a flowchart of the first ID certificate issuance processing;
FIG. 10 is a functional block diagram of a second service system;
FIG. 11 is a functional block diagram of a management device;
FIG. 12 is a diagram illustrating a second service utilization processing;
FIG. 13 is a flowchart of the second identifier possession certificate issuing processing;
FIG. 14 is a flowchart of a second ID certificate issuance processing;
FIG. 15 is a hardware configuration diagram of an information processing device.

DESCRIPTION OF EMBODIMENTS

The embodiment will be described in detail below with reference to the drawings.

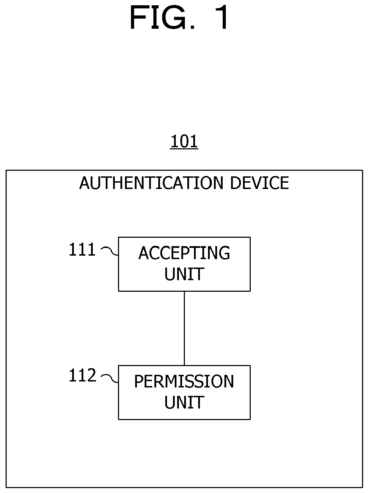

FIG. 1 illustrates an example of the functional configuration of an authentication device of an embodiment. The authentication device 101 in FIG. 1 includes an accepting unit 111 and a permission unit 112.

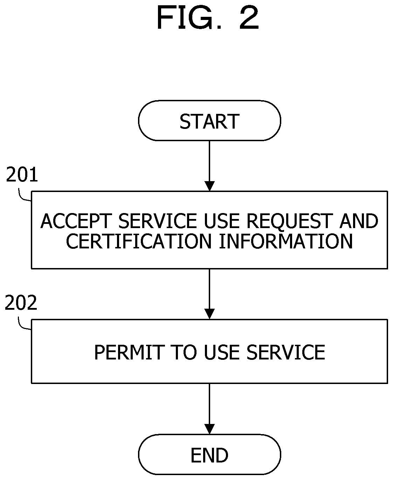

FIG. 2 is a flowchart illustrating an example of the authentication processing performed by the authentication device 101 in FIG. 1. The accepting unit 111 accepts the service use request of the user and the certification information indicating that the user has been authenticated, issued by each of the one or more authentication sources (step 201). In a case where the number of accepted pieces of certification information is no less than a predetermined number, the permission unit 112 permits the user to use the service (step 202).

According to the authentication device 101 in FIG. 1, it is possible to simplify user authentication when a user uses a service.

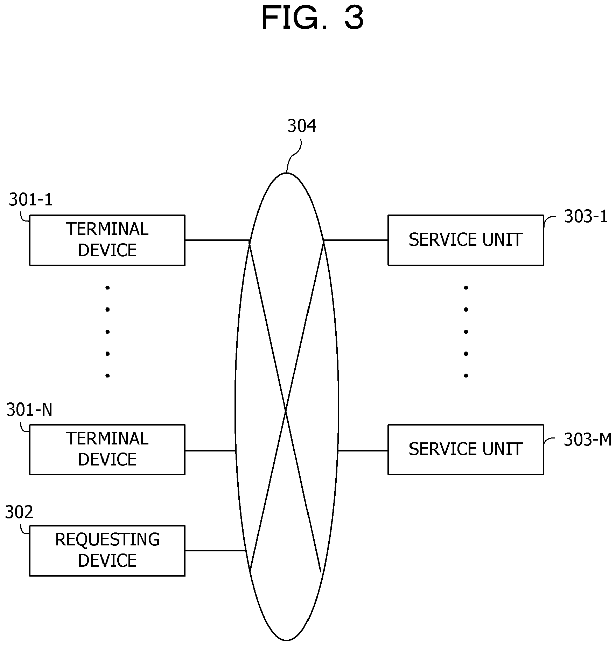

FIG. 3 illustrates an example of the functional configuration of the first service system including the authentication device 101 of FIG. 1. The service system in FIG. 3 includes terminal devices 301-1 to 301-N (N is an integer of 1 or more), a requesting device 302, and service units 303-1 to 303-M (M is an integer of 2 or more).

The terminal device 301-i (i = 1 to N) is the user's information processing device (computer). The terminal device 301-i may be a mobile terminal device such as a smartphone, a tablet, or may be a Personal Computer (PC).

The requesting device 302 is an information processing device of a business operator involved in the service system. The requesting device 302 may be a PC server or a server on a cloud.

The service units 303-j (j = 1 to M) are functional modules, which represent the information processing devices of the service providers or virtual machines running in the information processing devices of the service providers. The information-processing device of the service provider may be a PC server or a server on a cloud. The information processing device of the service provider corresponds to the authentication device 101 in FIG. 1.

The service provider may be an identity provider (IDP) providing user authentication as a service, or may be an operator providing other services such as issuing identity certificates. The IDP may be a social networking service (SNS) operator.

The terminal device 301-i, the requesting device 302, and the service unit 303-j are able to communicate with each other through the communication network 304. The communication network 304 is, for example, a wide area network (WAN).

The terminal device 301-i transmits a processing request to the requesting device 302 in accordance with the instruction input by the user.

For example, in response to the processing request received from the terminal device 301-i, the requesting device 302 transmits the identifier possession certificate issued by one or more other service units 303-j together with the service use request to the service units 303-j of any service provider. The other service unit 303-j corresponds to the authentication source, and the identifier possession certificate corresponds to certification information indicating that the user has been authenticated.

The service unit 303-j performs user authentication based on, for example, the service use request and the identifier possession certificate received from the requesting device 302. In a case where the user is authenticated, the service unit 303-j permits the use of the service by the user and provides the service to the user.

The service provider may be, for example, an issuer that issues ID certificates to users in a distributed ID distribution system. In this case, the service unit 303-j provides the user with a service of issuing an ID certificate. The user's name, address, telephone number, date of birth, and the like may be used as the ID information included in the ID certificate.

The issuer may be, for example, a police station, a company, a hospital, a university, or a mobility company. For example, the identity certificates issued by police stations may be driver licenses; the identity certificates issued by companies may be certificates of enrollment or Payroll Certificate; and the identity certificates issued by hospitals may be medical certificates. For example, the ID certificates issued by universities may be graduation certificates or transcripts, and the ID certificates issued by mobility companies may be driving history certificates or mobility certificates.

The user may use the services provided by the verifier by presenting the issued ID certificate to the verifier. The verifier verifies the identity certificate presented by the user and provides services for the user.

The verifier is, for example, a retailer, a bank, a corporation, an insurance company, or a real estate agent. The service provided by a retail outlet is, for example, the sale of goods; the service provided by a bank is, for example, the opening of a deposit account; and the service provided by a company is, for example, the provision of employment or transportation expenses. The services provided by insurance companies are, for example, the sale of insurance products, and the services provided by real estate agents are, for example, real estate brokerage services.

The retail store can verify the age of the user by, for example, the driver license presented by the user and sell alcohol or cigarettes to the user. The bank can verify the identity by, for example, the driver license presented by the user and allow the opening of a deposit account. The company confirms the educational background of the user by, for example, the graduation certificate presented by the user and employs the user. In addition, the company confirms the user's travel history by the travel certificate presented by the user and pays the user the transportation expenses.

The insurance company confirms the health condition of the user by the medical certificate presented by the user and sells insurance products such as life insurance and medical insurance to the user. In addition, the insurance company confirms the driving status of the user by the driving history certificate presented by the user and sells insurance products such as automobile insurance to the user. The real estate agent confirms the place of work and income of the user by the enrollment certificate and the payroll certificate presented by the user, and provides real estate brokerage services for the user.

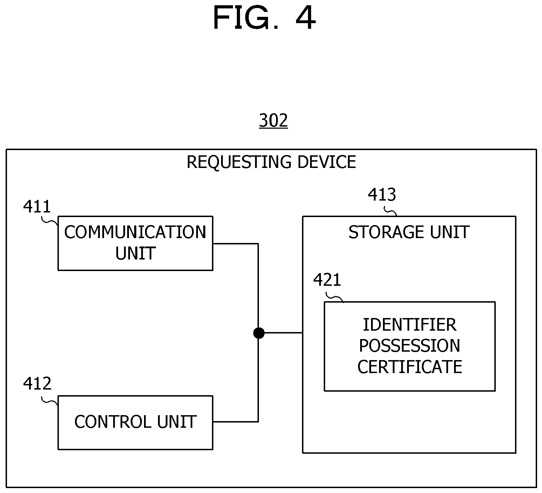

FIG. 4 illustrates an example of the functional configuration of the requesting device 302 of FIG. 3. The requesting device 302 in FIG. 4 includes a communication unit 411, a control unit 412, and a storage unit 413.

The storage unit 413 stores the identifier possession certificate 421 issued from each service unit 303-j to each user.

The identifier possession certificate 421 is information proving by a specific service unit 303-j that a specific user possesses an identifier indicating the user, and includes the identifier indicating the user. The identifier possession certificate 421 indicates that the user has been authenticated by a particular service unit 303. The identifier included in the identifier possession certificate 421 is an example of the first identification information.

The identifier included in the identifier possession certificate 421 is information that is able to be confirmed by each service unit 303-j as the information of the user himself/herself. As identifiers, user's email address, phone number, etc. may be used. The user's email address may be the email address of the mobile device or the email address of the PC. The user's phone number may be the phone number of a mobile terminal device or the phone number of a landline telephone.

The communication unit 411 receives from the user's terminal device 301-i, a processing request in which the request destination is any of the service units 303-j. The control unit 412 transmits the service use request requesting the issuance of an ID certificate and one or more identifier possession certificates 421 stored in the storage unit 413 to the service unit 303-j indicated by the processing request via the communication unit 411.

When the service unit 303-j requests the authentication information of the user, the control unit 412 requests the authentication information of the user to the terminal device 301-i via the communication unit 411. The user inputs the authentication information into the terminal device 301-i, and the terminal device 301-i transmits the input authentication information to the requesting device 302. The control unit 412 transmits the authentication information received from the terminal device 301-i to the service unit 303-j via the communication unit 411.

As the authentication information of the user, for example, a user ID and a password in the service provided by the service unit 303-j are used. Instead of passwords, biometric information or the like may be used.

When the user is authenticated by the service unit 303-j and the use of the service by the user is permitted, the communication unit 411 receives the ID certificate and the identifier possession certificate from the service unit 303-j. The control unit 412 stores the received identifier possession certificate in the storage unit 413 as the newly issued identifier possession certificate 421. Then, the control unit 412 transmits the received ID certificate to the terminal device 301-i via the communication unit 411.

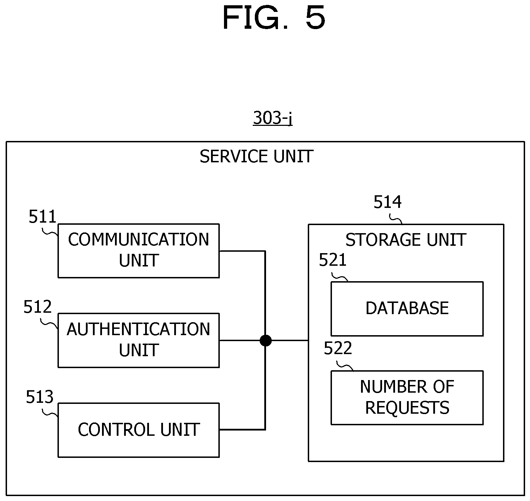

FIG. 5 illustrates an example of the functional configuration of the service unit 303-j in FIG. 3. The service unit 303-j in FIG. 5 includes a communication unit 511, an authentication unit 512, a control unit 513, and a storage unit 514. The functions of the authentication unit 512 correspond to those of the accepting unit 111 and the permission unit 112 in FIG. 1.

The storage unit 514 stores the database 521 and the number of requests 522 associated with the services provided by the service units 303-j.

The database 521 stores, for each user, the authentication information of the user in the service provided by the service unit 303-j, the identifier indicating the user, and the ID information held by the service unit 303-j. The authentication information, identifier, and ID information of each user are associated with each other. The identifiers included in the database 521 are examples of the second identification information.

The number of requests 522 represents the number of identifier possession certificates 421 that the service unit 303-j requests of the user in user authentication. For example, an integer of 1 or more may be used as the number of requests 522. In a case where the number of requests 522 is an integer of 2 or more, the identifier possession certificates 421 issued from different publishers of the number indicated by the number of requests 522 are requested to the user. The number of requests 522 corresponds to a predetermined number.

The communication unit 511 receives the service use request and one or more identifier possession certificates 421 from the requesting device 302. The authentication unit 512 accepts the received service use request and the received one or more identifier possession certificates 421, and performs user authentication based on the one or more identifier possession certificates 421. In user authentication based on the identifier possession certificates 421, the authentication unit 512 compares the number of the received identifier possession certificates 421 with the number of requests 522, and compares the identifiers included in each of the received identifier possession certificates 421 with the identifiers included in the database 521.

By comparing the identifier included in the identifier possession certificate 421 with the identifier included in the database 521, it is possible to check whether the identifier included in the identifier possession certificate 421 is registered in the database 521.

In a case where the number of identifier possession certificates 421 is equal to or larger than the number of requests 522 and the identifier included in each identifier possession certificate 421 matches a single identifier included in the database 521, the authentication unit 512 determines that the user authentication based on the identifier possession certificates 421 is successful. Successful user authentication indicates that the user has been authenticated by the service unit 303-j. In a case where the user authentication is successful, the authentication unit 512 permits the user to use the service.

When the user is allowed to use the service, the control unit 513 acquires the ID information associated with the identifier included in the received identifier possession certificate 421 from the database 521. Then, the control unit 513 generates an ID certificate including the acquired ID information, and transmits the generated ID certificate to the requesting device 302 via the communication unit 511. This will result in the issuance of an identity certificate to the user.

When the user is allowed to use the service, the authentication unit 512 generates an identifier possession certificate including the identifier included in the received identifier possession certificate 421, and transmits the generated identifier possession certificate to the requesting device 302 via the communication unit 511. Thereby, an identifier possession certificate indicating that the user is authenticated by the service unit 303-j is issued to the user. The user can use the service provided by another service unit 303-j by using the issued identifier possession certificate.

In a case where the number of identifier possession certificates 421 is less than the number of requests 522, the authentication unit 512 determines that the user authentication based on the identifier possession certificates 421 has failed. The authentication unit 512 also determines that the user authentication based on the identifier possession certificate 421 has failed when the identifier included in any of the identifier possession certificates 421 is not included in the database 521. The authentication unit 512 also determines that the user authentication based on the identifier possession certificate 421 has failed when the identifier included in any of the identifier possession certificates 421 is different from the identifiers included in the other identifier possession certificates 421.

In a case where the user authentication based on the identifier possession certificate 421 fails, the authentication unit 512 requests the authentication information of the user from the requesting device 302 via the communication unit 511, and the communication unit 511 receives the authentication information of the user from the requesting device 302. The authentication unit 512 performs user authentication based on the received authentication information, and the use of the service by the user is permitted, in a case where the user authentication based on the authentication information is successful.

When the use of the service by the user is permitted, the control unit 513 acquires the ID information associated with the authentication information of the user from the database 521. Then, the control unit 513 generates an ID certificate including the acquired ID information, and transmits the generated ID certificate to the requesting device 302 via the communication unit 511. This will result in the issuance of an identity certificate to the user.

When the use of the service by the user is permitted, the authentication unit 512 acquires the identifier associated with the authentication information of the user from the database 521. Then, the authentication unit 512 generates an identifier possession certificate including the acquired identifier, and transmits the generated identifier possession certificate to the requesting device 302 via the communication unit 511. Thereby, the identifier possession certificate indicating that the user is authenticated by the service unit 303-j is issued to the user. The user can use the service provided by another service unit 303-j by using the issued identifier possession certificate.

According to the service system in FIG. 3, after the user has acquired the identifier possession certificate 421 issued from the service unit 303-j with the number of requests 522 or more, simply presenting of the identifier possession certificate 421 allows the user to be authenticated. This eliminates the need to present the authentication information of the user and simplifies user authentication, thus reducing the workload of the user and the processing load of user authentication.

Even when the number of identifier possession certificates 421 presented by the user is less than the number of requests 522, it is possible for the user to use the service by performing user authentication based on the authentication information of the user.

Instead of transmitting the authentication information of the user in response to the request from the service unit 303-j, the requesting device 303 may transmit the authentication information of the user together with the identifier possession certificates 421, the number of which is less than the number of requests 522.

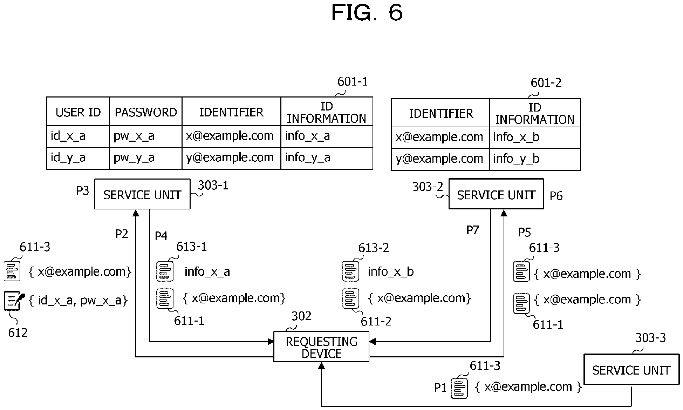

FIG. 6 illustrates an example of service utilization processing in the service system of FIG. 3. The service unit 303-1 is the service unit of the issuer that provides the service a that issues ID certificates, and the service unit 303-2 is the service unit of the issuer that provides the service b that issues ID certificates. The service unit 303-3 is the service unit of the IDP that provides user authentication as a service.

The database 601-1 corresponds to the database 521 stored in the service unit 303-1. In the database 601-1, it is assumed that user IDs, passwords, identifiers, and ID information of users x and y are registered. The user ID and password are the authentication information of the user in service a. As an identifier, the user's e-mail address may be registered.

For the user x, the user ID is "id_x_a", the password is "pw_x_a", the identifier is "x@example.com", and the ID information is "info_x_a". For the user y, the user ID is "id_y_a", the password is "pw_y_a", the identifier is "y@example.com", and the ID information is "info_y_a".

The database 601-2 corresponds to the database 521 stored in the service unit 303-2. It is assumed that the database 601-2 stores, for each of users x and y, a user ID, a password, an identifier, and ID information. However, in the database 601-2 of FIG. 6, the user ID and password are not illustrated.

The identifiers of the user x and the user y are the same as the identifiers registered in the database 601-1. The ID information of user x is "info_x_b" and the ID information of user y is "info_y_b".

The number of requests 522 in services a and b is "2". Therefore, in a case where the service unit 303-1 or the service unit 303-2 receives two or more identifier possession certificates 421, the use of the service a or the service b by the user is authorized. The service utilization processing in FIG. 6 is performed by the following procedure.

(P1) The authentication unit 512 of the service unit 303-3 confirms that the user x has the email address "x@example.com" notified as the identifier of the user x from the requesting device 302.

The authentication unit 512 transmits, for example, an e-mail containing the one time password to "x@ example.com" through the communication unit 511, and inquires of the user x what the one time password is. The authentication unit 512 may transmit the inquiry to the terminal device 301-i of the user x or may inquire by another communication method. In a case where the user x answers correctly with the one time password, authentication unit 512 determines that user x possesses "x@example.com".

In a case where it is confirmed that the user x possesses "x@example.com", the authentication unit 512 transmits the identifier possession certificate 611-3 including "x@example.com" to the requesting device 302 via the communication unit 511. Thus, the identifier possession certificate 611-3 is issued to the user x.

The identifier possession certificate 611-3 is information that proves that the user x possesses "x@example.com", and indicates that the user x has been authenticated by the service unit 303-3.

(P2) In response to the processing request received from the terminal device 301-i of the user x, the control unit 412 of the requesting device 302 transmits the service use request, the identifier possession certificate 611-3, and the authentication information 612 of the user x to the service unit 303-1 via the communication unit 411. The authentication information 612 includes the user ID "id_x_a" and the password "pw_x_a" of the user x.

(P3) Since the number of the received identifier possession certificates is less than the number of requests 522, the authentication unit 512 of the service unit 303-1 acquires the user ID and password associated with the identifier included in the identifier possession certificate 611-3 from the database 601-1. Then, the authentication unit 512 compares the user ID and password included in the received authentication information 612 with the user ID and password acquired from the database 601-1.

In a case where the user ID and password included in the authentication information 612 match the acquired user ID and password, the authentication unit 512 permits the use of the service a by the user x.

(P4) When the use of the service a is permitted, the control unit 513 acquires from the database 601-1, the ID information "info_x_a" associated with the user ID and password. Then, the control unit 513 transmits the ID certificate 613-1 including "info_x_a" to the requesting device 302 via the communication unit 511. Thus, the ID certificate 613-1 is issued to the user x.

The authentication unit 512 acquires the identifier "x@example.com" associated with the user ID and password from the database 601-1. Then, the authentication unit 512 transmits the identifier possession certificate 611-1 including "x@example.com" to the requesting device 302 via the communication unit 511. Thus, the identifier possession certificate 611-1 is issued to the user x.

The identifier possession certificate 611-1 is information that proves that the user x possesses "x@example.com", and indicates that the user x has been authenticated by the service unit 303-1.

(P5) The control unit 412 of the requesting device 302 transmits the service use request, the identifier possession certificate 611-1, and the identifier possession certificate 611-3 to the service unit 303-2 via the communication unit 411 in response to the processing request received from the terminal device 301-i of the user x.

(P6) The number of identifier possession certificates received by the service unit 303-2 is no less than the number of requests 522, and the identifier included in each identifier possession certificate matches the identifier "x@example.com" of the user x registered in the database 601-2. Then, the authentication unit 512 of the service unit 303-2 permits the use of the service b by the user x.

(P7) When the use of the service b is permitted, the control unit 513 acquires the ID information "info_x_b" associated with "x@example.com" from the database 601-2. Then, the control unit 513 transmits the ID certificate 613-2 including "info_x_b" to the requesting device 302 via the communication unit 511. Thus, the ID certificate 613-2 is issued to the user x.

The authentication unit 512 transmits, to the requesting device 302 via the communication unit 511, the identifier possession certificate 611-2 including the identifier "x@example.com" included in the received identifier possession certificates 611-1 and 611-3. Thus, the identifier possession certificate 611-2 is issued to the user x.

The identifier possession certificate 611-2 is information that proves that the user x possesses "x@example.com", and indicates that the user x has been authenticated by the service unit 303-2.

According to the service use processing in FIG. 6, the user x holds the identifier possession certificates, the number of which is equal to or larger than the number of requests 522 in the service b at the time when the identifier possession certificate 611-1 is acquired from the service unit 303-1. Therefore, the user x does not need to present the authentication information 612 when using the service b, and more easily obtains the ID certificate 613-2 by only presenting the identifier possession certificate 611-1 and the identifier possession certificate 611-3.

Even when a malicious third party breaks through the user authentication by the service unit 303-3 and illegally obtains the identifier possession certificate 611-3 of the user x, the number of identifier possession certificates held by the third party is only less than the number of requests 522 in the services a and b. Therefore, the third party is not allowed to use the service a or the service b unless the third party further breaks through the user authentication based on the user ID and password, which is performed by the service unit 303-1 or the service unit 303-2.

This reduces the possibility of the ID information "info_x_a" or ID information "info_x_b" being defrauded by a third party is reduced, and improves the security of the ID information.

Although increasing the number of requests 522 increases the resistance to the third party breaking through user authentication, even legitimate users are required to present authentication information until the number of identifier possession certificates they hold reaches the number of requests 522. This leads to more cases where legitimate users are asked for authentication information, which reduces user convenience. Therefore, the security of ID information and the convenience of users are in a trade-off relationship.

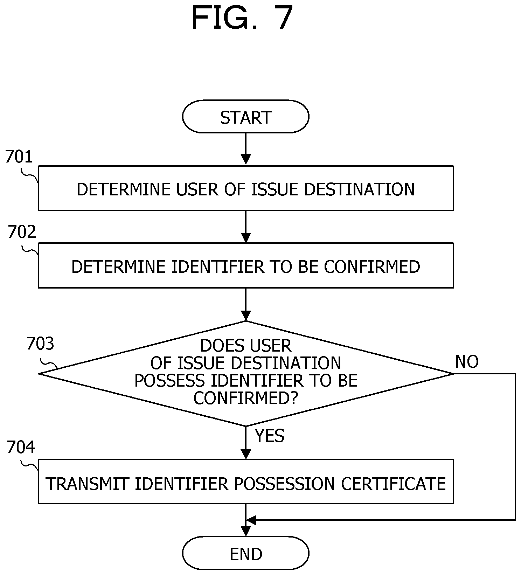

FIG. 7 is a flowchart illustrating an example of the first identifier possession certificate issuing processing in the service system of FIG. 3. The identifier possession certificate issuing processing in FIG. 7 is performed by the service unit 303-j that provides user authentication as a service.

In response to the processing request received from the terminal device 301-i, the requesting device 302 transmits the identifier indicating the requesting user to the service unit 303-j together with a service use request requesting the issuance of an identifier possession certificate.

The authentication unit 512 of the service unit 303-j determines the user who requested the service use request received from the requesting device 302 as the user to whom the identifier possession certificate is issued (step 701), and determines the received identifier as the identifier to be confirmed (step 702).

Next, the authentication unit 512 checks whether the user of the issue destination possesses the identifier to be confirmed (step 703).

For example, in a case where the identifier to be confirmed is an e-mail address, the authentication unit 512 transmits an e-mail containing a one time password to the identifier to be confirmed via the communication unit 511. In a case where the identifier to be confirmed is a telephone number, the authentication unit 512 transmits a short message containing the one time password to the identifier to be confirmed via the communication unit 511. The authentication unit 512 may transmit a voice message notifying the one time password to the identifier to be confirmed.

Next, the authentication unit 512 inquires the user of the issue destination about what the one time password is, and determines that the user has the identifier to be confirmed in a case where the user correctly answers the one time password. On the other hand, in a case where the user does not correctly answer the one time password, the authentication unit 512 determines that the user does not have the identifier to be confirmed. The authentication unit 512 may transmit the inquiry to the user's terminal device 301-i or may inquire by another communication method.

In a case where the user of the issue destination possesses the identifier to be confirmed (step 703, YES), the authentication unit 512 generates an identifier possession certificate including the identifier to be confirmed, and transmits it to the requesting device 302 via the communication unit 511 (step 704). On the other hand, in a case where the user of the issue destination does not have the identifier to be confirmed (step 703, NO), the service unit 303-j terminates the processing .

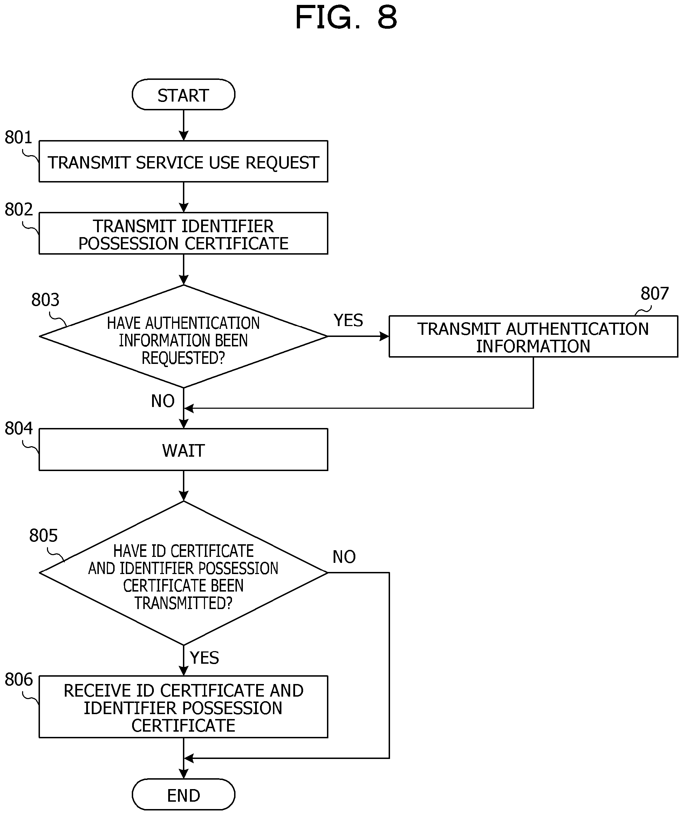

FIG. 8 is a flowchart illustrating an example of the ID certificate request processing in the service system of FIG. 3. First, the control unit 412 of the requesting device 302 transmits a service use request requesting the issuance of an ID certificate to the service unit 303-j via the communication unit 411 in response to a processing request received from the terminal device 301-i (step 801). Then, the control unit 412 transmits one or more identifier possession certificates 421 to the service unit 303-j via the communication unit 411 (step 802).

Next, the control unit 412 checks whether the authentication information of the user is requested from the service unit 303-j (step 803). In a case where the authentication information of the user is not requested (step 803, NO), the communication unit 411 waits for a fixed time (step 804) and checks whether the ID certificate and the identifier possession certificate are transmitted from the service unit 303-j during the waiting time (step 805).

On the other hand, in a case where the authentication information of the user is requested (YES in step 803), the control unit 412 acquires the authentication information from the terminal device 301-i and transmits the acquired authentication information to the service unit 303-j via the communication unit 411 (step 807). Then, the requesting device 302 performs the processing from step 804 onward.

In a case where the ID certificate and identifier possession certificate are transmitted from the service unit 303-j (step 805, YES), the communication unit 411 receives the ID certificate and identifier possession certificate (step 806). Then, the control unit 412 stores the received identifier possession certificate in the storage unit 413 as the newly issued identifier possession certificate 421.

On the other hand, in a case where the ID certificate and the identifier possession certificate are not transmitted from the service unit 303-j (step 805, NO), the requesting device 302 terminates the processing .

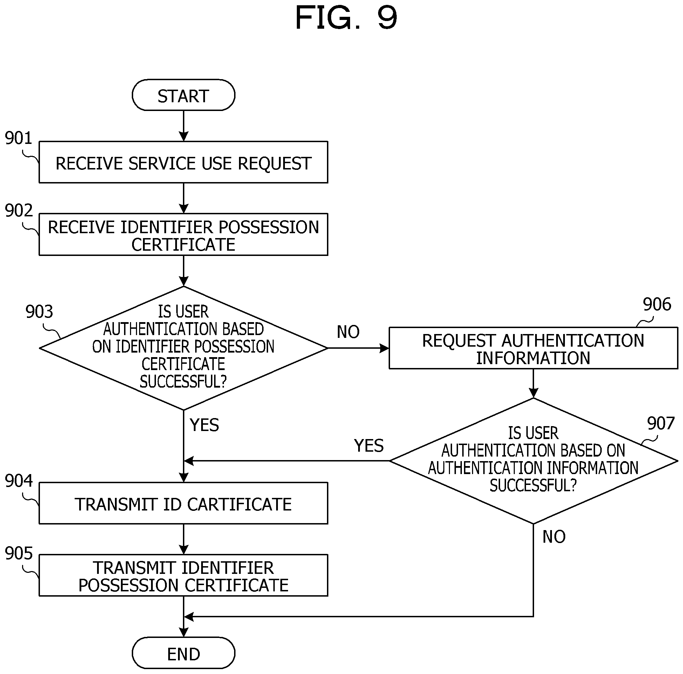

FIG. 9 is a flowchart illustrating an example of the first ID certificate issuance processing in the service system of FIG. 3. The ID certificate issuing processing in FIG. 9 is performed by the service unit 303-j that provides the service of issuing ID certificates.

First, the communication unit 511 of the service unit 303-j receives a service use request requesting the issuance of an ID certificate from the requesting device 302 (step 901), and receives one or more identifier possession certificates 421 from the requesting device 302 (step 902). Then, the authentication unit 512 accepts the received service use request and identifier possession certificate 421.

Next, the authentication unit 512 performs user authentication based on the identifier possession certificate 421 and checks whether the user authentication is successful (step 903). In a case where the user authentication based on the identifier possession certificate 421 is successful (YES in step 903), the authentication unit 512 permits the user to use the service.

Then, the control unit 513 acquires the ID information associated with the identifier included in the received identifier possession certificate 421 from the database 521, generates an ID certificate including the ID information, and transmits the ID certificate to the requesting device 302 via the communication unit 511 (step 904). Next, the authentication unit 512 generates an identifier possession certificate including the identifier included in the received identifier possession certificate 421, and transmits it to the requesting device 302 via the communication unit 511 (step 905).

On the other hand, in a case where the user authentication based on the identifier possession certificate 421 fails (step 903, NO), the authentication unit 512 requests the authentication information of the user to the requesting device 302 via the communication unit 511 (step 906). Then, the authentication unit 512 performs user authentication based on the authentication information received from the requesting device 302, and checks whether the user authentication is successful (step 907).

In user authentication based on authentication information, the authentication unit 512 checks whether a combination of a user ID and a password included in the received authentication information is registered in the database 521, for example.

In a case where the combination of the user ID and password is registered in the database 521, it is determined that the user authentication is successful. In a case where the combination of the user ID and password is not registered in the database 521, it is determined that the user authentication is unsuccessful.

The authentication unit 512 may compare a pair of the user ID and password included in the received authentication information with a pair of the user ID and password associated with the identifier included in the received identifier possession certificate in the database 521.

In a case where the pair of the user ID and password included in the authentication information matches the pair of the user ID and password associated with the identifier included in the identifier possession certificate, it is determined that the user authentication is successful. In a case where the pair of the user ID and password included in the authentication information do not match the pair of the user ID and password associated with the identifier included in the identifier possession certificate, it is determined that the user authentication has failed.

In a case where the user authentication based on the authentication information is successful (YES in step 907), the authentication unit 512 permits the user to use the service.

Then, the control unit 513 acquires the ID information associated with the authentication information of the user from the database 521, generates an ID certificate including the ID information, and transmits the ID certificate to the requesting device 302 via the communication unit 511 (step 904). Next, the authentication unit 512 acquires the identifier associated with the authentication information of the user from the database 521, generates an identifier possession certificate including the identifier, and transmits the identifier possession certificate to the requesting device 302 via the communication unit 511 (step 905).

In a case where the user authentication based on the authentication information fails (step 907, NO), the service unit 303-j terminates the processing.

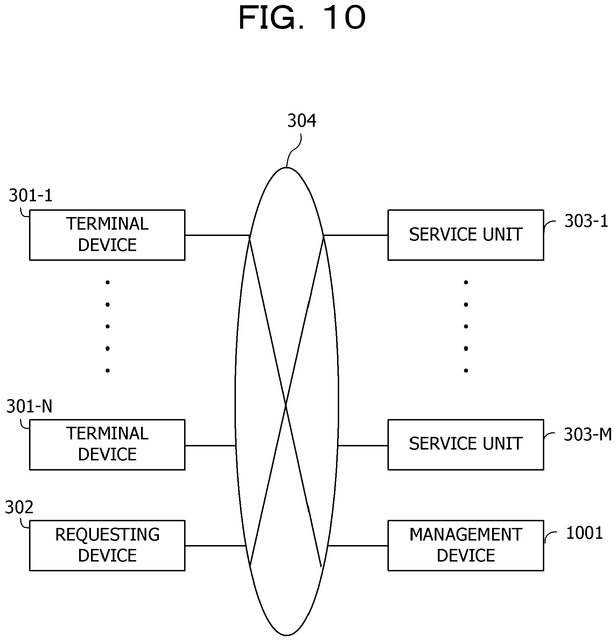

FIG. 10 illustrates an example of the functional configuration of a second service system including the authentication device 101 of FIG. 1. The service system of FIG. 10 has a configuration in which a management device 1001 is added to the service system of FIG. 3.

The management device 1001 is an information processing device of the operator that manages the number of identifier possession certificates issued for each identifier. The management device 1001 may be a PC server or a server on a cloud. The service unit 303-j and the management device 1001 are able to communicate with each other through the communication network 304.

In the service system of FIG. 10, when each service unit 303-j issues an identifier possession certificate to a user, it notifies the management device 1001 of the identifier included in the issued identifier possession certificate. The management device 1001 increments the number of issued identifier possession certificates corresponding to the identifier notified from the service unit 303-j, and notifies the latest number of issued proofs to the service unit 303-j in response to an inquiry from each service unit 303-j.

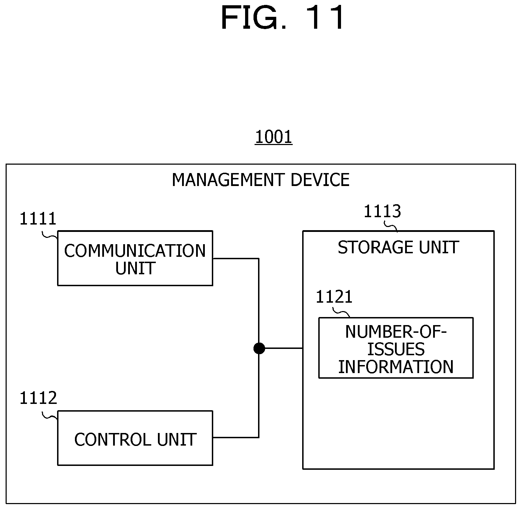

FIG. 11 illustrates an example of the functional configuration of the management device 1001 of FIG. 10. The management device 1001 in FIG. 11 includes a communication unit 1111, a control unit 1112, and a storage unit 1113. The storage unit 1113 stores the number-of-issue information 1121.

The number-of-issues information 1121 includes the number of issues associated with each identifier. The number of issues represents the total number of identifier possession certificates including the corresponding identifier among the identifier possession certificates issued in the service system.

When the authentication unit 303-j of the service unit 512 issues the identifier possession certificate, the authentication unit 511 transmits an issue report including the identifier included in the issued identifier possession certificate to the management device 1001 via the communication unit, thereby notifying the management device 1001 of the identifier.

The communication unit 1111 of the management device 1001 receives the issue report from the service unit 303-j. The control unit 1112 updates the number-of-issues information 1121 by incrementing by one the number of issues corresponding to the identifier included in the received issue report among the number of issues included in the number-of-issues information 1121.

When performing user authentication based on the identifier possession certificate, the authentication unit 512 of the service unit 303-j transmits an inquiry including the identifier included in the received identifier possession certificate to the management device 1001 via the communication unit 511.

The communication unit 1111 of the management device 1001 receives the inquiry from the service unit 303-j. The control unit 1112 acquires the number of issues, C, corresponding to the identifier included in the received inquiry from the number of issues information 1121 and notifies the service unit 303-j via the communication unit 1111.

The authentication unit 512 of the service unit 303-j determines the number of requests 522 in user authentication based on the notified number of issues, C. The authentication unit 512 calculates the number of candidates, K, for the number of requests 522 by, for example, the following equation:

$$K = t*C \quad ...(1)$$

In the equation (1), "t" is a given real number between 0 and 1, and "t * C" represents the product of t and C. Thus, the more C, the more K. The authentication unit 512 determines, as the number of requests 522, the larger value of K calculated by the equation (1) or the minimum number of requests, which is a predetermined constant. Then, the authentication unit 512 performs user authentication based on the identifier possession certificate using the determined number of requests 522.

As the legitimate user who owns the identifier acquires the identifier possession certificate from the multiple service units 303-j, the number of issues, C, corresponding to the identifier increases, and thus the number of requests 522 in the user authentication based on the identifier possession certificate also increases.

Therefore, even when a malicious third party tries to later illegally obtain the identifier possession certificate of the identifier and illegally obtain the user's ID information from each service unit 303-j, the increased number of requests 522 of identifier possession certificates will be requested. This makes it difficult for a third party to illegally obtain the user's identity information.

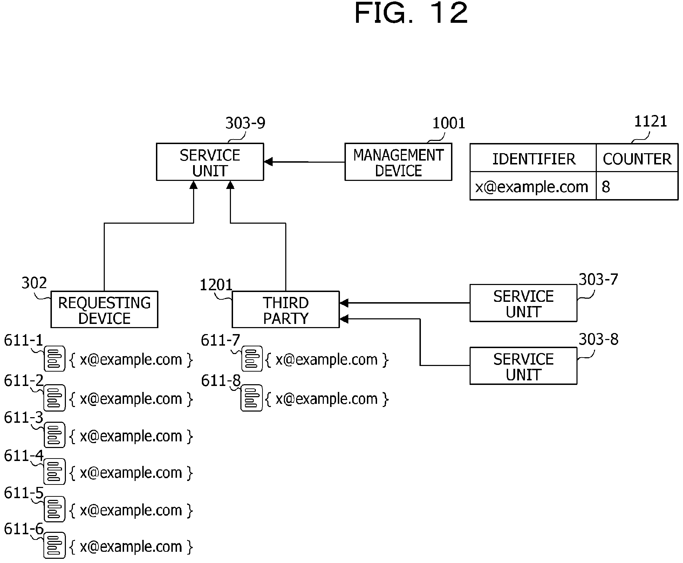

FIG. 12 illustrates an example of the second service utilization processing in the service system of FIG. 10. The service units 303-7 and 303-8 are the service units of the IDPs that provide user authentication as a service. Service unit 303-9 is the service unit of the issuer that provides the service of issuing identity certificates.

The requesting device 302 holds identifier possession certificates 611-1 to 611-6 containing the identifier "x@example.com" of the legitimate user x. The identifier possession certificates 611-1 to 611-6 are identifier possession certificates issued from the service units 303-1 to 303-6 (not illustrated) to the user x, respectively.

On the other hand, the malicious third party 1201 has illegally obtained the identifier possession certificates 611-7 and 611-8 containing "x@example.com" by breaking through the user authentication performed by the service unit 303-7 and the service unit 303-8. Identifier possession certificates 611-7 and 611-8 are the identifier possession certificates issued by the service department 303-7 and the service department 303-8, respectively.

The number-of-issues information 1121 stored by the management device 1001 includes an identifier and a counter. The counter represents the number of issues associated with each identifier. Since eight identifier possession certificates have been issued for the identifier "x@example.com", the value of the counter corresponding to "x@example.com" is "8".

In this case, the requesting device 302 transmits the service use request and the identifier possession certificates 611-1 to 611-6 to the service unit 303-9 in response to the processing request received from the terminal device 301-i of the user x.

The authentication unit 512 of the service unit 303-9 transmits an inquiry including the identifier "x@example.com" included in the received identifier possession certificates 611-1 to identifier possession certificate 611-6 to the management device 1001.

The control unit 1112 of the management device 1001 acquires the value "8" of the counter corresponding to "x@example.com" as the number of issues, C, from the number of issues information 1121, and notifies the service unit 303-9.

The authentication unit 512 of the service unit 303-9 uses the notified number of issues, C, to calculate K by the formula (1). For example, in a case where t = 0.5, K is calculated as follows:

$$K=0.5*8=4 \quad ...(2)$$

For example, in a case where the minimum number of requests for a service provided by the service unit 303-9 is "2", the calculation result "4" by Equation (2) is larger than the minimum number of requests. In this case, the authentication unit 512 determines the number of requests 522 to be "4", and performs user authentication based on the identifier possession certificate using the determined number of requests 522.

The number of identifier possession certificates 611-1 to 611-6 received from the requesting device 302 is "6", which is equal to or larger than the number of requests 522. Then, the identifier included in each identifier possession certificate matches the identifier "x@example.com" of user x. Then, the authentication unit 512 permits the use of the service by the user x. Thus, the user x obtains the ID certificate and the identifier possession certificate from the service unit 303-9.

On the other hand, when the third party 1201 transmits the service use request and the identifier possession certificates 611-7 and 611-8 to the service unit 303-9, the number of identifier possession certificates received by the service unit 303-9 is "2", which is less than the number of requests 522. Therefore, the authentication unit 512 does not permit the third party 1201 to use the service, and neither the ID certificate nor the identifier possession certificate is issued to the third party 1201.

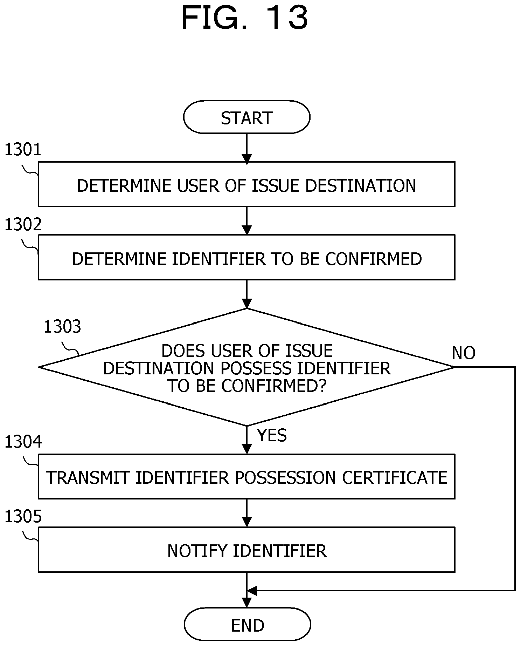

FIG. 13 is a flowchart illustrating an example of the second identifier possession certificate issuing processing in the service system of FIG. 10. The processing of steps 1301 to 1304 is similar to the processing of steps 701 to 704 in FIG. 7.

After transmitting the identifier possession certificate including the identifier to be confirmed to the requesting device 302, the authentication unit 512 of the service unit 303-j transmits an issue report including the same identifier as the identifier included in the identifier possession certificate to the management device 1001 via the communication unit 511 (step 1305). Thus, the identifier included in the identifier possession certificate is notified to the management device 1001.

The ID certificate request processing in the service system of FIG. 10 is similar to the ID certificate request processing of FIG. 8.

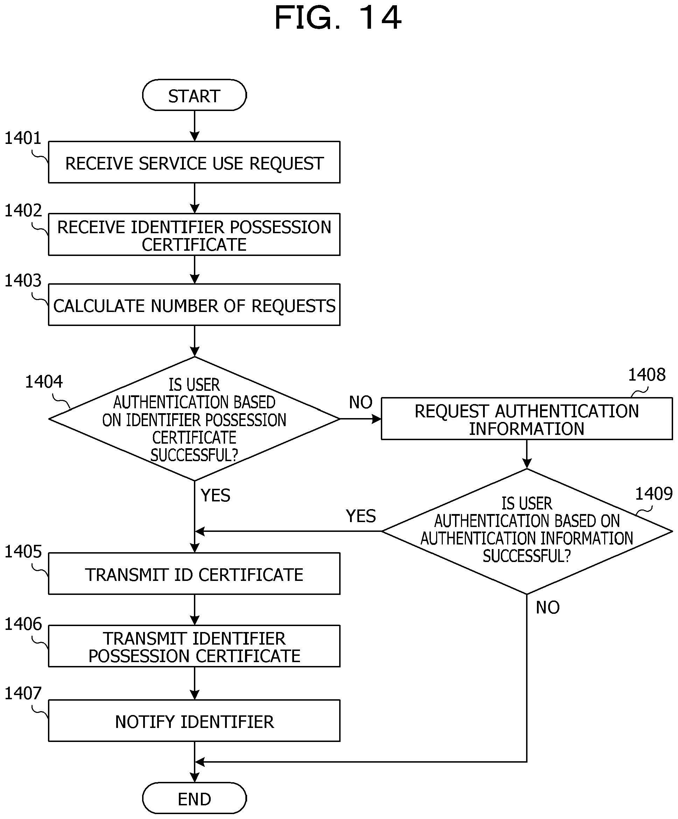

FIG. 14 is a flowchart illustrating an example of the second ID certificate issuance processing in the service system of FIG. 10. The processing of step 1401, step 1402, step 1404 to step 1406, step 1408, and step 1409 is similar to the processing of step 901 to step 907 in FIG. 9.

After accepting the service use request and the identifier possession certificate 421, the authentication unit 512 of the service unit 303-j transmits an inquiry including the identifier included in the received identifier possession certificate 421 to the management device 1001 via the communication unit 511. Then, the management device 1001 notifies the service unit 303-j of the number of issues corresponding to the identifier included in the received inquiry.

Next, the authentication unit 512 calculates the number of requests 522 using the notified number of issues (step 1403), and performs the processing of step 1404 and subsequent steps.

After transmitting the identifier possession certificate to the requesting device 302, the authentication unit 512 transmits an issue report including the same identifier as the identifier included in the identifier possession certificate to the management device 1001 via the communication unit 511 (step 1407). Thus, the identifier included in the identifier possession certificate is notified to the management device 1001.

The configuration of the authentication device 101 in FIG. 1 is only an example, and some of the components may be omitted or changed depending on the application or conditions of the authentication device 101.

The configuration of the service system in FIG. 3 and FIG. 10 is only an example, and some components may be omitted or changed depending on the application or conditions of the service system. The configurations of the requesting device 302 in FIG. 4, the service unit 303-j in FIG. 5, and the management device 1001 in FIG. 11 are just examples, and some of the components may be omitted or changed according to the application or conditions of the service system.

The flowcharts in FIG. 2, FIG. 7 to FIG. 9, FIG. 13, and FIG. 14 are just examples, and some of the processing may be omitted or changed according to the configuration or conditions of the authentication device 101 or the service system. The service utilization processing illustrated in FIG. 6 and FIG. 12 is only one example, and the service utilization processing varies depending on the configuration of the service system and the number of requests 522.

Equations (1) and (2) are just examples, and the authentication unit 512 may calculate K using another calculation equation.

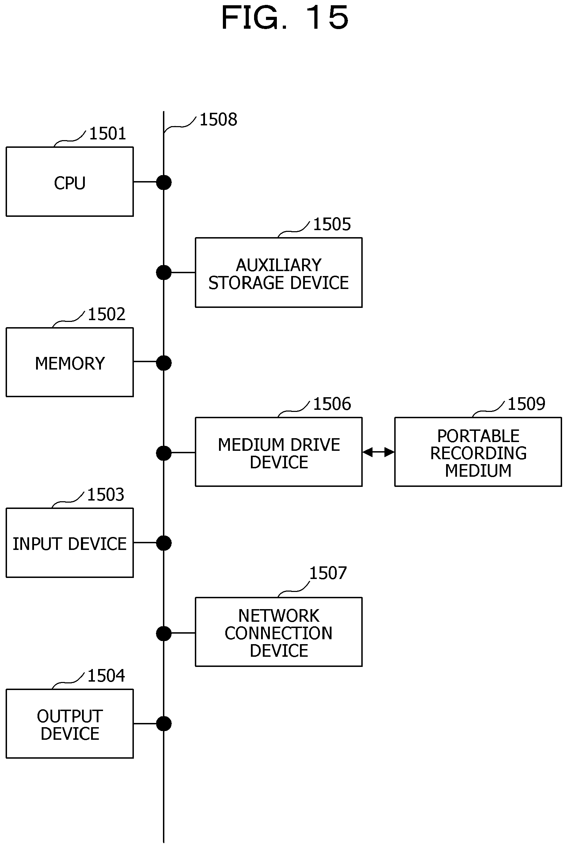

FIG. 15 illustrates an example of the hardware configuration of an information processing device used as the authentication device 101 in FIG. 1, the requesting device 302 in FIG. 4, the service unit 303-j in FIG. 5, and the management device 1001 in FIG. 11. The information processing device of FIG. 15 includes a central processing unit (CPU) 1501, a memory 1502, an input device 1503, an output device 1504, an auxiliary storage device 1505, a medium drive device 1506, and a network connection device 1507. These components are hardware and are connected to each other by a bus 1508.

The memory 1502 is a semiconductor memory such as, for example, ROM (Read Only Memory), RAM (Random Access Memory), flash memory, or the like, and stores a program and data used for processing. The memory 1502 may operate as the storage unit 413 of FIG. 4, the storage unit 514 of FIG. 5, or the storage unit 1113 of FIG. 11.

For example, the CPU 1501 (processor) operates as the accepting unit 111 and the permission unit 112 in FIG. 1 by executing the program using the memory 1502.

The CPU 1501 also operates as the control unit 412 in FIG. 4 by executing the program using the memory 1502. The CPU 1501 also operates as the authentication unit 512 and the control unit 513 in FIG. 5 by executing the program using the memory 1502. The CPU 1501 also operates as the control unit 1112 in FIG. 11 by executing the program using the memory 1502.

The input device 1503 is, for example, a keyboard, a pointing device, or the like, and is used for inputting instructions or information from the operator. The output device 1504 is, for example, a display device, a printer, a speaker, or the like, and is used for making an inquiry to the operator or outputting the processing result.

The auxiliary storage device 1505 is, for example, a magnetic disk device, an optical disk device, a magneto-optical disk device, a tape device, or the like. The auxiliary storage 1505 may be a hard disk drive or an SSD (Solid State Drive). The information processing device is able to store programs and data in the auxiliary storage device 1505 and load them into the memory 1502 for use. The auxiliary storage 1505 may operate as the storage 413 of FIG. 4, the storage 514 of FIG. 5, or the storage 1113 of FIG. 11.

The medium drive 1506 drives the portable recording medium 1509 to access its recorded contents. The portable recording medium 1509 is a memory device, a flexible disk, an optical disk, a magneto-optical disk, or the like. The portable recording medium 1509 may be a CD-ROM (Compact Disk Read Only Memory), a DVD (Digital Versatile Disk), a USB (Universal Serial Bus) memory, or the like. The operator may store programs and data in the portable recording medium 1509 and use them by loading them into the memory 1502.

In this way, the computer-readable recording medium storing the programs and data used for processing is a physical (non-temporary) recording medium, such as the memory 1502, auxiliary storage device 1505, or portable recording medium 1509.

The network connection device 1507 is a communication interface circuit, which is connected to the communication network 304 and performs data conversion associated with communication. The information processing device is able to receive programs and data from an external device via the network connection device 1507 and load them into the memory 1502 for use. The network connection device 1507 may operate as the communication unit 411 in FIG. 4, the communication unit 511 in FIG. 5, or the communication unit 1111 in FIG. 11.

The service unit 303-j in FIG. 5 may be a functional module representing a virtual machine running in the information processing device in FIG. 15. In this case, the CPU 1501 operates as hardware that realizes the functions of the authentication unit 512 and the control unit 513 in FIG. 5 by operating a virtual machine. The memory 1502 operates as hardware that realizes the functions of the storage unit 514 in FIG. 5, and the network connection device 1507 operates as hardware that realizes the functions of the communication unit 511 in FIG. 5.

It should be noted that the information processing apparatus does not need to include all the components of FIG. 15, and some of the components may be omitted or changed depending on the application or conditions. For example, in a case where an interface with the operator is not required, the input device 1503 and output device 1504 may be omitted. When the information processing device does not utilize the portable recording medium 1509, the medium driving device 1506 may be omitted.

As the terminal device 301-i in FIGS. 3 and 10, an information processing device similar to that in FIG. 15 may be used.

While the disclosed embodiments and their advantages have been described in detail, those skilled in the art will appreciate various modifications, additions, and omissions without departing from the scope of the invention as explicitly set forth in the following claims.

CITATION LIST

[Patent Document 1] Japanese Laid-open Patent Publication No. 2021-60914
[Patent Document 2] Japanese Laid-open Patent Publication No. 2021-60915
[Patent Document 3] Japanese Laid-open Patent Publication No. 2011-191882
[Patent Document 4] Japanese National Publication of International Patent Application No. 2016-511849
[Patent Document 5] US Patent Application Publication No. 2019 / 0319945
[Patent Document 6] U.S. Patent No. 10157275

**Claims**

1. An authentication program for causing a computer to perform processing comprising:

   accepting a service usage request of a user and one or more pieces of certification information indicating that the user is authenticated, each piece of the one or more pieces of certification information being information issued by each of one or more authentication sources; and

permitting the user to use the service in a case where a number of the accepted one or more pieces of certification information is no less than a predetermined number.

2. The authentication program according to claim 1, wherein

   each of the one or more pieces of certification information includes first identification information indicating the user, and
   the permitting of the user to use the service includes:

      comparing the first identification information included in each of the accepted one or more pieces of certification information with second identification information that is recorded in a database in association with the service; and
      permitting the user to use a service in a case where the first identification information matches the second identification information.

3. The authentication program according to claim 1 or 2, wherein
   the permitting of the user to use the service includes:
   issuing certification information to the user, the certification information indicating that the user is authenticated by the computer.

4. The authentication program according to any one of claims 1 to 3, the processing further comprising:

      performing user authentication based on the authentication information of the user when the number of accepted one or more pieces of the certification information is less than the predetermined number; and
      permitting the user to use a service in a case where the user is authenticated by the user authentication.

5. The authentication program according to any one of claims 1 to 4, the processing further comprising:

      determining the predetermined number based on a total number of the one or more pieces of certification information issued by each of the one or more authentication sources, wherein the predetermined number increases as the total number of the one or more pieces of the certification information increases.

6. An authentication device comprising:

      an acceptance unit configured to accept a service usage request of a user and one or more pieces of certification information indicating that the user is authenticated, each piece of the one or more pieces of certification information being information issued by each of one or more authentication sources; and
      a permission unit configured to permit the user to use the service in a case where a number of the accepted one or more pieces of certification information is no less than a predetermined number.

7. The authentication device according to claim 6, wherein

   each of the one or more pieces of certification information includes first identification information indicating the user, and
   the permission unit is configured to:

      compare the first identification information included in each of the accepted one or more pieces of certification information with second identification information that is recorded in a database in association with the service; and
      permit the user to use a service in a case where the first identification information matches the second identification information.

8. The authentication device according to claim 6 or 7, wherein the permission unit is configured to issue certification information to the user, the certification information indicating that the user is authenticated by the computer.

9. The authentication device according to any one of claims 6 to 8, wherein the permission unit is configured to

      perform user authentication based on the authentication information of the user when the number of accepted one or more pieces of the certification information is less than the predetermined number; and
      permit the user to use a service in a case where the user is authenticated by the user authentication.

10. The authentication device according to any one of claims 6 to 9, wherein

      the permission unit is configured to determine the predetermined number based on a total number of the one or more pieces of certification information issued by each of the one or more authentication sources, and

the predetermined number increases as the total number of the one or more pieces of the certification information increases.

11. An authentication method implemented by a computer, the method comprising:

accepting a service usage request of a user and one or more pieces of certification information indicating that the user is authenticated, each piece of the one or more pieces of certification information being information issued by each of one or more authentication sources; and permitting the user to use the service in a case where a number of the accepted one or more pieces of certification information is no less than a predetermined number.

12. The authentication method according to claim 11, wherein

each of the one or more pieces of certification information includes first identification information indicating the user, and the permitting of the user to use the service includes:

comparing the first identification information included in each of the accepted one or more pieces of certification information with second identification information that is recorded in a database in association with the service; and permitting the user to use a service in a case where the first identification information matches the second identification information.

13. The authentication method according to claim 11 or 12, wherein
the permitting of the user to use the service includes:
issuing certification information to the user, the certification information indicating that the user is authenticated by the computer.

14. The authentication method according to any one of claims 11 to 13, the processing further comprising:

performing user authentication based on the authentication information of the user when the number of accepted one or more pieces of the certification information is less than the predetermined number; and permitting the user to use a service in a case where the user is authenticated by the user authentication.

15. The authentication method according to any one of claims 11 to 14, the processing further comprising:

determining the predetermined number based on a total number of the one or more pieces of certification information issued by each of the one or more authentication sources, wherein the predetermined number increases as the total number of the one or more pieces of the certification information increases.

# FIG. 1

<u>101</u>

AUTHENTICATION DEVICE

111 — ACCEPTING UNIT

112 — PERMISSION UNIT

# FIG. 2

START

201
ACCEPT SERVICE USE REQUEST AND
CERTIFICATION INFORMATION

202
PERMIT TO USE SERVICE

END

# FIG. 3

# FIG. 4

302

REQUESTING DEVICE

411 COMMUNICATION UNIT

412 CONTROL UNIT

413 STORAGE UNIT

421 IDENTIFIER POSSESSION CERTIFICATE

# FIG. 5

303-j

SERVICE UNIT

511 COMMUNICATION UNIT

512 AUTHENTICATION UNIT

513 CONTROL UNIT

514 STORAGE UNIT

521 DATABASE

522 NUMBER OF REQUESTS

# FIG. 6

| | | | 601-1 |
|---|---|---|---|
| USER ID | PASSWORD | IDENTIFIER | ID INFORMATION |
| id_x_a | pw_x_a | x@example.com | info_x_a |
| id_y_a | pw_y_a | y@example.com | info_y_a |

| | 601-2 |
|---|---|
| IDENTIFIER | ID INFORMATION |
| x@example.com | info_x_b |
| y@example.com | info_y_b |

# FIG. 7

START

701 DETERMINE USER OF ISSUE DESTINATION

702 DETERMINE IDENTIFIER TO BE CONFIRMED

703 DOES USER OF ISSUE DESTINATION POSSESS IDENTIFIER TO BE CONFIRMED?

NO

YES

704 TRANSMIT IDENTIFIER POSSESSION CERTIFICATE

END

# FIG. 8

START

801 TRANSMIT SERVICE USE REQUEST

802 TRANSMIT IDENTIFIER POSSESSION CERTIFICATE

803 HAVE AUTHENTICATION INFORMATION BEEN REQUESTED?

YES → 807 TRANSMIT AUTHENTICATION INFORMATION

NO

804 WAIT

805 HAVE ID CERTIFICATE AND IDENTIFIER POSSESSION CERTIFICATE BEEN TRANSMITTED?

NO

YES

806 RECEIVE ID CERTIFICATE AND IDENTIFIER POSSESSION CERTIFICATE

END

# FIG. 9

```
                    ┌─────────────┐
                    │    START    │
                    └─────────────┘
                           │
                           ▼
901  ┌──────────────────────────────────────┐
     │     RECEIVE SERVICE USE REQUEST       │
     └──────────────────────────────────────┘
                           │
                           ▼
902  ┌──────────────────────────────────────┐
     │     RECEIVE IDENTIFIER POSSESSION     │
     │              CERTIFICATE              │
     └──────────────────────────────────────┘
                           │
                           ▼
903              ╱─────────────────╲
            ╱    IS USER             ╲        NO        906 ┌────────────────────────┐
           ╱  AUTHENTICATION BASED    ╲──────────────────▶│  REQUEST AUTHENTICATION │
           ╲ ON IDENTIFIER POSSESSION ╱                    │       INFORMATION       │
            ╲   CERTIFICATE          ╱                     └────────────────────────┘
             ╲  SUCCESSFUL?        ╱                                   │
               ╲───────────────╱                                      ▼
                     │                                   907  ╱─────────────────╲
                     │ YES                         YES    ╱    IS USER          ╲
                     │                          ◀────────╱  AUTHENTICATION BASED ON╲
                     │                                   ╲ AUTHENTICATION INFORMATION╱
                     ▼                                    ╲   SUCCESSFUL?         ╱
904  ┌──────────────────────────────────────┐              ╲───────────────╱
     │        TRANSMIT ID CERTIFICATE        │                     │
     └──────────────────────────────────────┘                     │ NO
                     │                                             │
                     ▼                                             │
905  ┌──────────────────────────────────────┐                     │
     │        TRANSMIT IDENTIFIER            │                     │
     │       POSSESSION CERTIFICATE          │                     │
     └──────────────────────────────────────┘                     │
                     │                                             │
                     ▼◀────────────────────────────────────────────┘
               ┌─────────────┐
               │     END     │
               └─────────────┘
```

# FIG. 10

304

301-1  TERMINAL DEVICE

303-1  SERVICE UNIT

301-N  TERMINAL DEVICE

303-M  SERVICE UNIT

302  REQUESTING DEVICE

1001  MANAGEMENT DEVICE

# FIG. 11

1001

MANAGEMENT DEVICE

1111

COMMUNICATION UNIT

1112

CONTROL UNIT

1113

STORAGE UNIT

1121

NUMBER-OF-ISSUES INFORMATION

# FIG. 12

(303-9) **SERVICE UNIT** ← (1001) **MANAGEMENT DEVICE**

| IDENTIFIER | COUNTER |
|---|---|
| x@example.com | 8 |

(1121)

(302) **REQUESTING DEVICE**

(1201) **THIRD PARTY** ← (303-7) **SERVICE UNIT**
← (303-8) **SERVICE UNIT**

611-1 { x@example.com }
611-2 { x@example.com }
611-3 { x@example.com }
611-4 { x@example.com }
611-5 { x@example.com }
611-6 { x@example.com }

611-7 { x@example.com }
611-8 { x@example.com }

# FIG. 13

START

1301 — DETERMINE USER OF ISSUE DESTINATION

1302 — DETERMINE IDENTIFIER TO BE CONFIRMED

1303 — DOES USER OF ISSUE DESTINATION POSSESS IDENTIFIER TO BE CONFIRMED? — NO

YES

1304 — TRANSMIT IDENTIFIER POSSESSION CERTIFICATE

1305 — NOTIFY IDENTIFIER

END

# FIG. 14

START

1401 RECEIVE SERVICE USE REQUEST

1402 RECEIVE IDENTIFIER POSSESSION CERTIFICATE

1403 CALCULATE NUMBER OF REQUESTS

1404 IS USER AUTHENTICATION BASED ON IDENTIFIER POSSESSION CERTIFICATE SUCCESSFUL?

NO → 1408 REQUEST AUTHENTICATION INFORMATION

1409 IS USER AUTHENTICATION BASED ON AUTHENTICATION INFORMATION SUCCESSFUL?

YES

1405 TRANSMIT ID CERTIFICATE

1406 TRANSMIT IDENTIFIER POSSESSION CERTIFICATE

1407 NOTIFY IDENTIFIER

YES

NO

END

# FIG. 15

1508

1501

CPU

1505

AUXILIARY
STORAGE DEVICE

1502

MEMORY

1506

MEDIUM DRIVE
DEVICE

1509

PORTABLE
RECORDING
MEDIUM

1503

INPUT DEVICE

1507

NETWORK
CONNECTION
DEVICE

1504

OUTPUT
DEVICE

## INTERNATIONAL SEARCH REPORT

| International application No. |
|---|
| **PCT/JP2021/038196** |

### A. CLASSIFICATION OF SUBJECT MATTER

*G06F 21/33*(2013.01)i
FI:  G06F21/33

According to International Patent Classification (IPC) or to both national classification and IPC

### B. FIELDS SEARCHED

Minimum documentation searched (classification system followed by classification symbols)

G06F21/33

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-49752 A (HITACHI LTD) 08 March 2012 (2012-03-08) paragraphs [0001]-[0064] | 1-4, 6-9, 11-14 |
| A | | 5, 10, 15 |
| Y | JP 2006-92530 A (IHC KK) 06 April 2006 (2006-04-06) paragraphs [0043]-[0085], [0412]-[0419] | 1-4, 6-9, 11-14 |
| Y | JP 2005-56393 A (RICOH CO LTD) 03 March 2005 (2005-03-03) paragraphs [0139]-[0143] | 4, 9, 14 |
| A | JP 2016-525807 A (INTERDIGITAL PATENT HOLDINGS, INC) 25 August 2016 (2016-08-25) paragraphs [0008]-[0022], [0116]-[0124] | 1-15 |
| A | JP 2013-218446 A (HITACHI LTD) 24 October 2013 (2013-10-24) paragraphs [0001]-[0072] | 1-15 |
| A | JP 2003-345930 A (HITACHI LTD) 05 December 2003 (2003-12-05) paragraphs [0001]-[0063] | 1-15 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2021/038196** |

**C.    DOCUMENTS CONSIDERED TO BE RELEVANT**

| Category* | Citation of document, with indication, where appropriate, of the relevant passages | Relevant to claim No. |
| --- | --- | --- |
| A | 才所敏明, 辻井重男, インターネット時代の本人確認基盤に関する考察 －ＮＡＦから ＧＡＦへ－, コンピュータセキュリティシンポジウム2020, 19 October 2020, pp. 115-122 see all pages, (SAISHO, Toshiaki. TSUJII, Shigeo. A Study on Identification and Authentication Framework in Internet Era -From NAF to GAF-. Computer Security Symposium 2020.) | 1-15 |

Form PCT/ISA/210 (second sheet) (January 2015)

INTERNATIONAL SEARCH REPORT
Information on patent family members

International application No.

**PCT/JP2021/038196**

| Patent document cited in search report | | | Publication date (day/month/year) | Patent family member(s) | | | Publication date (day/month/year) |
|---|---|---|---|---|---|---|---|
| JP | 2012-49752 | A | 08 March 2012 | WO | 2012/026189 | A1 | |
| JP | 2006-92530 | A | 06 April 2006 | (Family: none) | | | |
| JP | 2005-56393 | A | 03 March 2005 | US<br>paragraphs [0201]-[0206]<br>EP | 2005/0044248<br><br>1501002 | A1<br><br>A2 | |
| JP | 2016-525807 | A | 25 August 2016 | US<br>paragraphs [0041]-[0055],<br>[0147]-[0158]<br>WO<br>EP<br>CN<br>KR 10-2016-0004363<br>TW | 2016/0087957<br><br><br>2014/176539<br>2989770<br>105144656<br><br>201541977 | A1<br><br><br>A1<br>A1<br>A<br>A<br>A | |
| JP | 2013-218446 | A | 24 October 2013 | (Family: none) | | | |
| JP | 2003-345930 | A | 05 December 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060914 A
- JP 2021060915 A
- JP 2011191882 A
- JP 2016511849 A
- US 20190319945
- US 10157275 B